# EUROPEAN PATENT SPECIFICATION

(11) **EP 1 832 855 B1**
(45) Date of publication and mention of the grant of the patent: **14.01.2009**
(21) Application number: 07102989.6
(22) Date of filing: 23.02.2007
(51) Int. Cl.: G01F 23/38

(54) **Level indicator for containers, particularly containers intended to hold liquefied gases**
Füllstandsanzeiger für Behälter, im Besonderen Behälter für Flüssiggase
Indicateur de niveau pour conteneurs, spécialement les conteneurs destinés à contenir des gaz liquéfiés

(30) Priority: 07.03.2006 IT PD20060079
(43) Date of publication of application: 12.09.2007
(73) Proprietor: Cavagna Group S.p.A., 25010 Ponte S. Marco di Calcinato (Prov. of Brescia) (IT)
(72) Inventor: Bertoglio, Emanuele, 25010, Calcinatello (BS) (IT); Crottogini, Pierangelo, 25010, Ponte San Marco (BS) (IT)
(74) Representative: Cantaluppi, Stefano

(56) References cited:
- US-A- 4 507 961
- US-A- 4 580 450
- US-B1- 6 497 145

## Description

### Technical field

This invention relates to a level indicator for containers, particularly containers intended to hold liquefied gases of the type incorporating the characteristics mentioned in the preamble of claim 1. Containers of this type are known from US4,580,450.

### Background art

It is known that the level in containers such as bottles containing liquefied petroleum gas (LPG) can be determined by weighing the container. As the container is emptied of its content its weight decreases as a consequence.

This technology is however not very practical for ordinary use on the part of the user.

Containers provided with suitable level indicators are also known.

An example of such level indicators is described in French Patent no. 1501693. In this document the indicator comprises a floating level sensor whose arm is connected through a geared transmission to a transducer of the rotating type which in turn bears a first ferromagnetic element. The latter is in turn magnetically coupled to a second ferromagnetic element located outside the container which controls the moving equipment of a level display.

Such an indicator is subject to some disadvantages inherent in the geared transmission between the float and transducer. Gears are in fact subject to both wear and possible jamming and/or friction which might have an adverse effect on the reading of the level within the container. In addition to this, the display requires an appropriate location on the container, which must be suitably provided.

Another level indicator which makes it possible to avoid drilling additional holes in the wall of the container is described in EP0709656. This result is achieved by associating the indicator with the gas delivery valve, laterally therewith.

This option however adversely interferes with the performance of repeated operations such as container filling, which is normally carried out using specific standardised equipment which must be compatible for filling both containers with valves provided with a level indicator and those without that device.

As it is the lateral part of the valve which is affected by the operation of attaching equipment for filling, it follows that bottles with a valve provided with a lateral level indicator must be filled with special equipment, or that the quadrant of the indicator must be taken off, or again that the containers must be diverted to alternative dedicated lines, with significant economic costs.

### Description of the invention

The problem underlying this invention is that of providing a level indicator for containers, particularly containers intended to hold liquefied gases, which is structurally and functionally designed so as to allow all the disadvantages complained of with reference to the cited prior art to be overcome. This problem is resolved by the invention through a level indicator for containers, particularly containers intended to hold liquefied gases, constructed in accordance with the appended claims.

### Brief description of the drawings

Advantages and characteristics of the present invention will become clearer from the following detailed description which is given with reference to the appended drawings which are provided purely by way of non-limiting example and in which:
- Figure 1 is a diagrammatical view in cross-section of a container for liquefied gases comprising a level indicator according to a first embodiment of the invention,
- Figure 2 is a view in longitudinal cross-section of a detail of the container in Figure 1 on an enlarged scale,
- Figures 3 to 5 are perspective views of component elements of the detail in Figure 2,
- Figures 6 and 7 are views in cross-section of a container with a level indicator according to a variant of the invention and a detail of the aforesaid indicator respectively.

### Preferred embodiments of the invention

In the figures, 1 indicates as a whole a container of the type intended to hold liquefied gases under pressure. Container 1 is provided with a threaded opening 2 in which there engages a threaded spigot 3 of a delivery/filling valve 4 of the tap type. Valve 4 has a body 5 provided with a threaded connection 6 which is connected to the desired application and has a control wheel 7. Within body 5 there is a conduit 8 terminating in the valve seat 9 on which there is a plug 10 borne by a piston 11 controlled by wheel 7 to press plug 10 towards or vice versa away from valve seat 9 in order to obstruct and to allow the delivery of gas respectively.

At the bottom of body 5, that is corresponding to spigot 3, a tubular sleeve 11 provided with windows 12 for the free passage of gas, within which is held and retained a tubular sheath 13, is engaged in conduit 8. A rod 14 is movably guided within sheath 13.

Rod 14 passes within conduit 8, through plug 10 as far as a blind hole 15 made in a tubular end 16 which extends as far as a summital seat of piston 11 close to wheel 7. Tail 16 is of one piece with piston 11 and is therefore leaktight with regard to the exterior. At the extremity extending into hole 15 rod 14 has a portion 17 of ferromagnetic material, forming a first ferromagnetic element, which is therefore able to move within hole 15 as one piece with the rod itself.

At the opposite extremity, rod 14 is connected to an arm 18 of a rocker 19, which is in turn centrally pivoted on a support 20 which is of one piece with the free extremity of sheath 13 and whose opposite arm 21 bears a float detector 22. The assembly of rod 14, sheath 13, support and rocker 19, 20 and corresponding float 22 defines a mechanical level sensor, indicated as a whole by 23, located within container 1 to measure the level of the liquid present therein continuously. Rod 14 therefore acts as a linear transducer of the level sensor to linearly displace the ferromagnetic portion 17 according to the position of float 22.

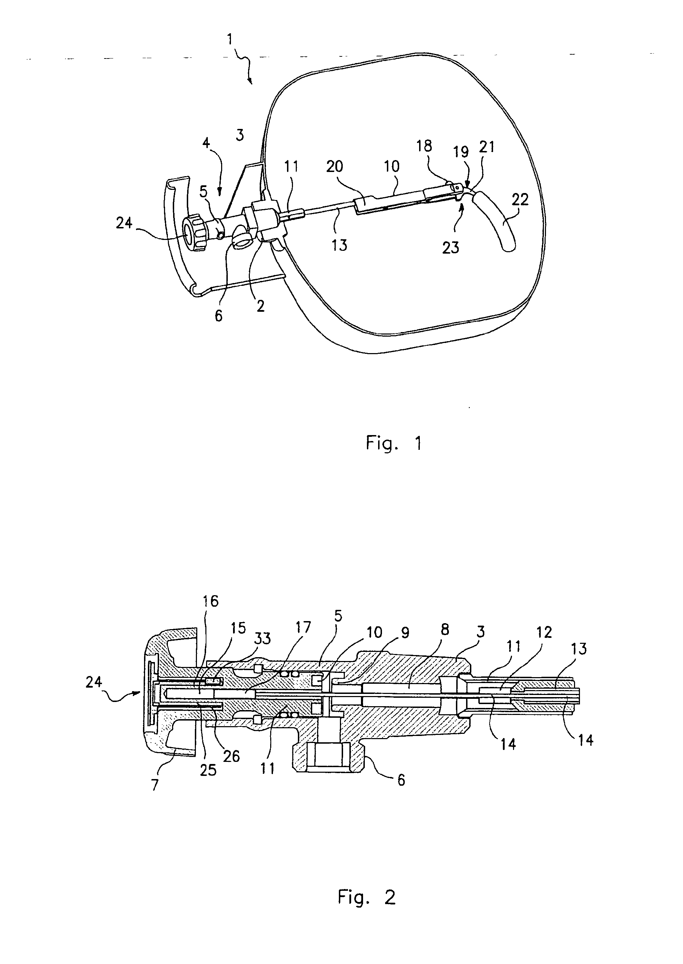

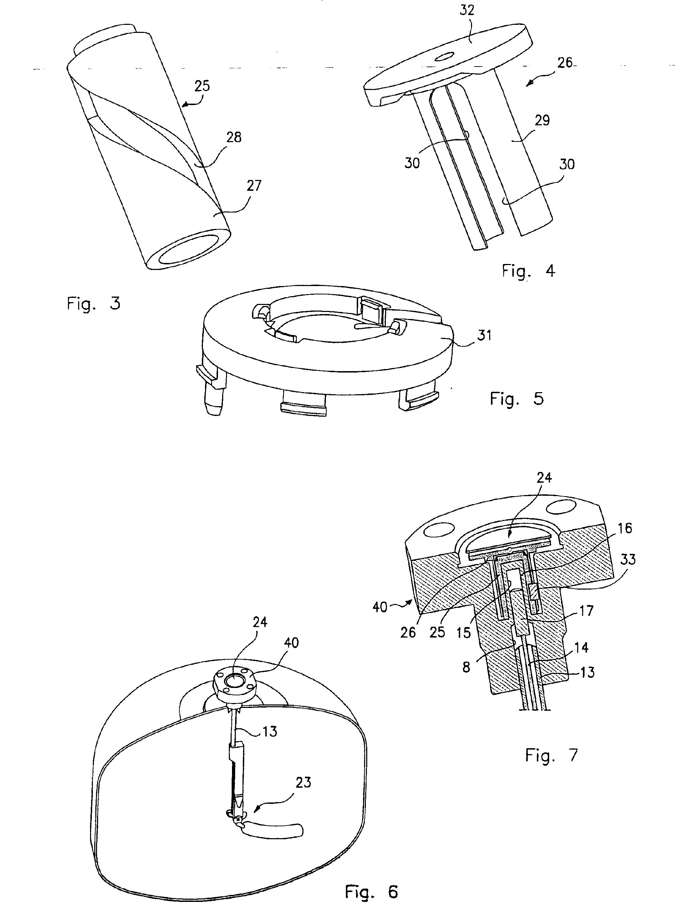

Level sensor 23 acts together with a display 24 located outside container 1. In the example in Figures 1 to 5, display 24 is positioned on wheel 7, while in the example in Figures 6 and 7 it is located on a support which is indicated as a whole by 40.

In both cases display 24 comprises a fixed unit 25 and a moving unit 26, relative rotational movement between them indicating the level detected by level sensor 23.

The fixed unit comprises a sleeve 27 bearing one (or more than one) helical groove 28 which can be gently forced onto tubular tail 16, of which it therefore becomes an integral part.

The moving unit comprises a further sleeve 29 which in turn has one (or more than one - two in the example illustrated) groove 30 which may run in a helical course, with a pitch different from that of groove 28, or which may be straight, corresponding to a helical course having an infinite pitch.

The number of guide grooves 28 will preferably be the same as the number of guide grooves 30.

The fixed and moving units are fitted together with the ability to rotate relative to each other and the assembly is completed by a cover 31 provided with a corresponding number of reference marks, not shown, which number of reference marks, for example of the alphanumerical or diagrammatical type placed on an indicator plate 32 fixed to the top of sleeve 29, make it possible for the level of liquid present in container 1 to be read.

Fixed and moving units 25, 26 are connected together by a second ferromagnetic element, such as a permanent magnet 33 engaging in the corresponding guide grooves of guide 28 and 30.

Ferromagnetic element 33 is in turn magnetically connected to the portion 17 of ferromagnetic material borne by rod 14 so that when the latter moves along the axis of hole 15 there is a corresponding identical linear displacement of the former along the guide groove of guide 28, 30, with consequent relative rotation between fixed unit 25 and moving unit 26.

The embodiment of the level indicator illustrated in figures 6 and 7 differs from what has hitherto been illustrated only in the fact that valve body 5 in the first embodiment is here replaced by support 40. The latter however has the same structural characteristics as the previous example, with the obvious exception of piston 11, wheel 7 and the corresponding plug, as well as the gas intake corresponding to the windows 12 made in sleeve 11 of the first embodiment. Sheath 13 is directly nested in conduit 8, which in turn directly ends in hole 15.

The level indicator operates as follows.

As the level of gas in container 1 varies the position of float 22 varies and rocker 19 tilts as a consequence. This results in corresponding positioning of the first ferromagnetic element 17 in blind hole 15, which is moved in one direction or the other by rod 14.

The position of the second ferromagnetic element 33 corresponds to the position of the first ferromagnetic element 17 on account of the magnetic coupling between the two. This brings about relative rotation between fixed and moving units 25, 26 which displays the level of liquid remaining in container 1 on the display.

The problem set is resolved through these arrangements and there are many consequent advantages, including the facts that:
- an adequate cross-section for the passage of gas is maintained through the valve to avoid penalising filling times,
- the readability of the reading for the fluid level remaining in the container is improved for all users,
- reliability and efficiency of the valve separating the internal parts in contact with the gas from the external parts intended solely for level display is ensured,
- the readability of the level indicator is unchanged whether the tap is open or closed.

## Claims

1. A level indicator for containers, particularly containers intended to hold liquefied gases, including a mechanical level sensor (23) which is positioned within the container (1) and a display (24) associated with the level sensor which is positioned outside the container, magnetic coupling means being located between the said sensor and the said display to activate the display in relation to the level detected by the sensor, maintaining the display hydraulically separate from the level sensor and the interior of the container, the said sensor comprising a linear transducer (14) associated with a float detector (22) to linearly displace a first ferromagnetic element (17) according to the position of the said float detector and the said magnetic coupling means comprising a second ferromagnetic element (33) hydraulically separate from the first ferromagnetic element and located between a fixed unit (25) and a moving unit (26) of the said display, **characterised in** both the said fixed and moving unit being provided with guides (28,30), at least one of which is helical (28), of different pitch, the said second ferromagnetic element being engaged in both the said guides to cause rotation of the moving unit through translational movement of the second ferromagnetic element along the said guides.

2. A level indicator for containers according to Claim 1, in which the said indicator is incorporated in a delivery valve (4) which in turn comprises a control wheel (7), and in which the said display is located on the said wheel and incorporated therewith.

3. A level indicator for containers according to Claim 1 or 2, in which one of the said guides (30) is straight, or has an infinite pitch.

4. A level indicator for containers according to one or more of the preceding claims, in which the said level sensor comprises a guide sheath (13) in which there is able to move a rod (14) bearing the said ferromagnetic element (17) at one extremity and attached at the opposite extremity to the float detector of the said level sensor, the said first ferromagnetic element being movably housed in a blind hole (15) made in a tubular tail (16) of the display device.

5. A level indicator for containers according to Claim 4, in which the said tubular tail (16) bears the fixed unit (25) of the display on which one of the said guides is provided and on which a further sleeve (29) belonging to the moving unit (26) of the display is rotatably fitted, the said further sleeve bearing the other of the said guides, the second ferromagnetic element being engaged in both the said guides and being magnetically coupled with the first ferromagnetic element which can move within the said blind hole.

6. A level indicator for containers according to one or more of Claims 4 or 5, In which the said rod (14) is guided within a conduit (8) extending within a body (5) of a delivery valve incorporating said indicator.

## Patentansprüche

1. Füllstandsanzeiger für Behälter, insbesondere Behälter, die zum Speichern von Flüssiggasen vorgesehen sind, mit einem mechanischen Füllstandssensor (23), der innerhalb des Behälters (1) positioniert ist, und mit einem mit dem Füllstandssensor zugeordneten Display (24), das außerhalb des Behälters positioniert ist, mit einer magnetischen Kupplungseinrichtung, die zwischen dem Sensor und dem Display angeordnet ist, um das Display bezüglich dem durch den Sensor erfassten Füllstand zu aktivieren, wobei das Display hydraulisch vom Füllstandssensor und dem Inneren des Behälters getrennt beibehalten wird, wobei der Sensor einen linearen Wandler (14) aufweist, der einem Schwimmerdetektor (22) zugeordnet ist, um ein erstes ferromagnetisches Element (17) gemäß der Position des Schwimmerdetektors linear zu versetzen, und wobei die magnetische Kupplungseinrichtung ein zweites ferromagnetisches Element (33) aufweist, das vom ersten ferromagnetischen Element hydraulisch getrennt und zwischen einer fixierten Einrichtung (25) und einer beweglichen Einrichtung (26) des Displays angeordnet ist, **dadurch gekennzeichnet, dass** sowohl die fixierte als auch die bewegliche Einrichtung mit Führungen (28, 30) versehen sind, wobei mindestens eine von ihnen eine spiralförmige Führung (28) mit unterschiedlicher Ganghöhe ist, wobei das zweite ferromagnetische Element mit beiden Führungen in Eingriff steht, um die Drehung der beweglichen Einrichtung durch die translatorische Bewegung des zweiten ferromagnetischen Elements entlang der Führungen zu bewirken.

2. Füllstandsanzeiger für Behälter gemäß Anspruch 1, in dem der Anzeiger in einem Förderventil (4) angeordnet ist, welches wiederum eine Steuer/Regelscheibe (7) aufweist, und in dem das Display auf der Scheibe angeordnet und darin eingefügt ist.

3. Füllstandsanzeiger für Behälter gemäß Anspruch 1 oder 2, in dem eine der Führungen (30) gerade ist, oder eine unendliche Ganghöhe aufweist.

4. Füllstandsanzeiger für Behälter gemäß einem oder mehreren der vorhergehenden Ansprüche, in dem der Füllstandssensor ein Führungsrohr (13) aufweist, in dem sich ein Rundstab (14), der das ferromagnetische Element (17) an einem Endpunkt trägt und am entgegengesetzten Endpunkt am Schwimmerdetektor des Füllstandssensors angeordnet ist, bewegen kann, wobei das erste ferromagnetische Element in einem Blindloch (15), das in einem Rohrende (16) der Displayeinrichtung hergestellt ist, beweglich aufgenommen ist.

5. Füllstandsanzeiger für Behälter gemäß Anspruch 4, in dem das Rohrende (16) die fixierte Einrichtung (25) des Displays trägt, auf der eine der Führungen vorgesehen ist und auf der eine weitere Hülse (29), die zur beweglichen Einrichtung (26) des Displays gehört, drehbeweglich eingepasst ist, wobei die weitere Hülse die andere der Führungen trägt, wobei das zweite ferromagnetische Element mit beiden Führungen in Eingriff steht und mit dem ersten ferromagnetischen Element, welches sich innerhalb des Blindlochs bewegen kann, magnetisch verbunden ist.

6. Füllstandsanzeiger für Behälter gemäß Anspruch 4 oder 5, in dem der Rundstab (14) innerhalb eines Kanals (8) geführt wird, der sich innerhalb eines Körpers (5) des Förderventils, das den Anzeiger enthält, erstreckt.

## Revendications

1. Indicateur de niveau pour des récipients, particulièrement des récipients destinés à contenir des gaz liquéfiés, comprenant un capteur de niveau mécanique (23) qui est positionné dans le récipient (1) et un afficheur (24) associé au capteur de niveau qui est positionné à l'extérieur du récipient, des moyens de couplage magnétique étant situés entre ledit capteur et ledit afficheur pour activer l'afficheur en relation avec le niveau détecté par le capteur, maintenant l'afficheur séparé hydrauliquement du capteur de niveau et de l'intérieur du récipient, ledit capteur comprenant un transducteur linéaire (14) associé à un détecteur flottant (22) pour déplacer linéairement un premier élément ferromagnétique (17) en fonction de la position dudit détecteur flottant et lesdits moyens de couplage magnétique comprenant un deuxième élément ferromagnétique (33) séparé hydrauliquement du premier élément ferromagnétique et situé entre une unité fixe (25) et une unité mobile (26) dudit afficheur, **caractérisé en ce que** les deux dites unités fixe et mobile sont pourvues de guides (28, 30), au moins l'un d'eux étant hélicoïdal (28), de différents pas, ledit deuxième élément ferromagnétique étant engagés dans les deux dits guides pour provoquer la rotation de l'unité mobile par un mouvement de translation du deuxième élément ferromagnétique le long desdits guides.

2. Indicateur de niveau pour des récipients selon la revendication 1, dans lequel ledit indicateur est incorporé dans une vanne de distribution (4) qui comprend à son tour une roue de commande (7), et dans lequel ledit afficheur est situé sur ladite roue et incorporé avec celle-ci.

3. Indicateur de niveau pour des récipients selon la revendication 1 ou 2, dans lequel l'un desdits guides (30) est droit, ou a un pas infini.

4. Indicateur de niveau pour des récipients selon une ou plusieurs des revendications précédentes, dans lequel ledit capteur de niveau comprend une gaine de guidage (13) dans laquelle une tige (14) supportant ledit élément ferromagnétique (17) à une extrémité et fixée à l'extrémité opposée au détecteur flottant dudit capteur de niveau est capable de se déplacer, ledit premier élément ferromagnétique étant logé de manière mobile dans un trou borgne (15) réalisé dans une queue tubulaire (16) du dispositif d'affichage.

5. Indicateur de niveau pour des récipients selon la revendication 4, dans lequel ladite queue tubulaire (16) supporte l'unité fixe (25) de l'afficheur sur laquelle un desdits guides est prévu et sur laquelle un autre manchon (29) appartenant à l'unité mobile (26) de l'afficheur est assemblé en rotation, ledit autre manchon supportant l'autre desdits guides, le deuxième élément ferromagnétique étant engagé dans les deux dits guides et étant couplé magnétiquement au premier élément ferromagnétique qui peut se déplacer dans ledit trou borgne.

6. Indicateur de niveau pour des récipients selon une ou plusieurs des revendications 4 ou 5, dans lequel ladite tige (14) est guidée dans un conduit (8) s'étendant dans un corps (5) d'une vanne de distribution incorporant ledit indicateur.
